# EUROPÄISCHE PATENTSCHRIFT

(11) **EP 1 425 950 B1**
(45) Veröffentlichungstag und Bekanntmachung des Hinweises auf die Patenterteilung: **07.06.2006**
(21) Anmeldenummer: 03027710.7
(22) Anmeldetag: 02.12.2003
(51) Int. Cl.: A01D 41/12, A01F 12/60, A01D 33/08, A01D 90/12

(54) **Vorratsbehälter und Verschlussstopfen**
Container and plug
Réservoir et bouchon

(30) Priorität: 04.12.2002 US 309976
(43) Veröffentlichungstag der Anmeldung: 09.06.2004
(73) Patentinhaber: DEERE & COMPANY, Moline, Illinois 61265-8098 (US)
(72) Erfinder: Pope, Glenn E., IL 61486 Viola (US); Reimer, Mark J., IA 52807 Davenport (US)
(74) Vertreter: Holst, Sönke

(56) Entgegenhaltungen:
- EP-A- 0 525 441
- FR-A- 2 581 601
- US-A- 3 664 525
- US-A- 4 523 690
- US-B1- 6 285 198

## Beschreibung

Die Erfindung betrifft eine Kombination aus einem Vorratsbehälter einer Erntemaschine für geerntetes Erntegut, der eine als bodenseitige Ablauföffnung dienende Öffnung aufweist (siehe z.B. US-A-3664525) und einem Verschlussstopfen.

Landwirtschaftlich angebautes Erntegut kann als essbares Erntegut, nichtessbares Erntegut, genetisch modifizierte Organismen (GMO), nichtgenetisch modifizierte Organismen, organisch angebaut, pestizidfrei oder entsprechend anderer Eigenschaften klassifiziert werden. Nichtessbares Erntegut können beispielsweise Fasern liefernde Pflanzen, Baumwolle oder Gummi sein. Genetisch modifiziertes Erntegut kann Gemüse sein, das genetisch manipuliert wurde, um die mögliche Regalstandzeit gegenüber traditionell angebautem Gemüse zu verlängern. Organisch angebautes Erntegut wird von Pflanzen geerntet, die ohne Beaufschlagung mit bestimmten Pestiziden, Herbiziden oder anderen Chemikalien angebaut wurden.

Das Erntegut kann entsprechend spezifischer Eigenschaften oder Spezifikationen angebaut werden. Die Eigenschaften des Ernteguts können auf der genetischen Zusammensetzung des Ernteguts oder den Anbaupraktiken des Ernteguts beruhen, oder auf beiden. Es kann beispielsweise eine bestimmte Art von Mais angebaut werden, der aufgrund genetischer oder umgebungsbedingter Faktoren einen größeren Ölgehalt hat als andere Arten. In ähnlicher Weise kann eine bestimmte Art von Sojabohnen angebaut werden, die einen anderen Proteingehalt oder eine andere wünschenswerte Eigenschaft hat. Ein Verarbeiter, eine pharmazeutische Gesellschaft, ein Hersteller oder ein anderer Betroffener kann den Wunsch haben, landwirtschaftliche Produkte mit spezifischen Eigenschaften von einem Anbauer oder anderen Lieferanten zu erwerben. Der Anbauer oder Lieferant kann sich wünschen, für Erntegut mit spezifischen Eigenschaften einen höheren Preis zu verlangen als für ein handelsübliches Erntegut. Der Erwerber des landwirtschaftlichen Produkts kann eine hinreichende Bestätigung wünschen, dass das gekaufte landwirtschaftliche Produkt tatsächlich die gesuchten Eigenschaften aufweist.

Es besteht somit ein Bedarf daran, Erntegut mit spezifischen Eigenschaften während des Anbaus und der Verteilung und jeglicher daraus abgeleiteter Produkte genau zu identifizieren. Außerdem kann ein Erwerber eines landwirtschaftlichen Produkts oder Ernteguts die Möglichkeit wünschen oder verlangen, die Identität des Ernteguts mit spezifischen Eigenschaften nachzuverfolgen, um das Vorhandensein von Eigenschaften des Ernteguts oder die Abwesenheit unerwünschter Eigenschaften als Bedingung für eine kommerzielle Transaktion zu überprüfen.

Es besteht demnach ein Bedarf, Erntegut während der Ernte zu trennen, damit keine Vermischung von Erntegut oder Erntegutresten mit verschiedenen Eigenschaften stattfindet. Um die Trennung während der Ernte sicherzustellen, ist es bevorzugt, Erntemaschinen, wie Mähdrescher, gründlich zu reinigen, bevor Erntegut mit anderer Identität oder Eigenschaften geerntet wird.

Bei einem Mähdrescher ist der Korntank an seiner Oberseite zur Umgebung hin offen. Durch die Oberseite des Korntanks eintretendes Regenwasser wird nach unten fließen und sich in den unteren Bereichen des Korntanks ansammeln, insbesondere an der (vom Arbeitsplatz des Fahrers aus betrachtet) linken Seite des Korntanks unter dem vertikalen Entladeschneckenförderer. Unter dem Entladeschneckenförderer befindet sich ein Element, das den Entladeschneckenförderer abstützt. Das Element hat tiefe Ablauföffnungen oder Löcher, die zum Ausräumen des Korns verwendet werden. Diese Löcher werden durch Verschlussplatten verschlossen, die an einer unteren Oberfläche des Elements befestigt werden. Diese Löcher tendieren aber dazu, sich über ihre Höhe bis hinunter zu den Verschlussplatten mit Wasser und Erntegut zu füllen. Nachdem sich das Korn oder anderes Pflanzenmaterial innerhalb der Löcher des Elements über eine gewisse Zeit in dem Wasser abgesetzt hat, wird es dort anfangen, zu verrotten und sich mit sich selbst und dem Element zu verkleben, sodass die Löcher verstopfen.

Zu einer Reinigung des Korntanks des Mähdreschers müssen Korn und anderes Pflanzenmaterial durch diese Löcher hindurch entfernt werden, nachdem die Abdeckplatten entfernt sind. Da aber Korn oder anderes Pflanzenmaterial die Löcher verstopft, wird eine Reinigung des Korntanks verzögert bis die Löcher freigemacht werden können. Die Reinigung des Korntanks ist somit zeitaufwändig und schwierig und erfordert die Verwendung eines Stocks oder Schraubendrehers, um das Korn oder anderes Pflanzenmaterial, das die Löcher verstopft, zu durchdringen und die Löcher effektiv freizugraben.

Das der Erfindung zu Grunde liegende Problem wird darin gesehen, die genannten Probleme zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung betrifft einen Verschluss für ein System zur Reinigung eines Vorratsbehälters einer Erntemaschine. Der Vorratsbehälter, bei dem es sich z. B. um den Korntank eines Mähdreschers oder einen Vorratsbehälter einer Maschine zum Ernten von Kartoffeln oder Rüben handeln kann, weist wenigstens eine zum Reinigen vorgesehene Öffnung auf, die als bodenseitiger Ablauf und/oder Ort zum Ausräumen des Korns dient. Es wird ein Verschlussstopfen vorgeschlagen, der eine Größe und Form hat, die es ermöglicht, ihn in die Öffnung einzusetzen, so dass er sie während des normalen Betriebs der Erntemaschine effektiv verschließt.

Auf diese Weise kann durch Herausziehen des Verschlussstopfens die Öffnung geöffnet und der Vorratsbehälter gereinigt werden, ohne dass ein größerer Aufwand für die Entnahme oder die anschließende Wiederanbringung des Verschlussstopfens erforderlich wäre.

Bei einer Reihe von Mähdreschern ist der Querschnitt der Öffnung mondsichelförmig. Es bietet sich daher an, auch den Verschlussstopfen mit einem mondsichelförmigen Querschnitt zu versehen.

An der Außenseite der Öffnung kann der Verschlussstopfen mit einem Griffelement versehen werden, das ein manuelles Herausnehmen und Einsetzen des Verschlussstopfens erleichtert.

Vorzugsweise sind vier Öffnungen in zwei Paaren angeordnet. Der Verschlussstopfen kann jeweils zwei dieser Öffnungen verschließen. Dazu weist er zwei jeweils einer der beiden Öffnungen zugeordnete Körper auf. Gegebenenfalls kann das Griffelement eine Brücke zwischen den beiden Körpern bilden.

Der Verschlussstopfen kann einen Flansch aufweisen, der an einer Oberfläche des Vorratsbehälters anliegt, wenn der Verschlussstopfen vollständig in die Öffnung eingefügt ist.

In einer Ausführungsform hat der Vorratsbehälter ein mit Gewinde versehenes Loch (oder mehrere Löcher), das mit einem Loch im Flansch des Verschlussstopfens ausgerichtet ist. Ein Befestigungselement kann sich durch die Löcher erstrecken und ein Gewinde aufweisen, das mit dem Gewinde des Lochs im Vorratsbehälter im Eingriff steht. Dadurch wird der Verschlussstopfen am Vorratsbehälter gesichert.

Der Verschlussstopfen bzw. sein in die Öffnung einbringbarer Körper hat vorzugsweise eine Länge, die der Tiefe der Öffnung entspricht. Dadurch erhält man einen planen Abschluss im Innenraum des Vorratsbehälters, wodurch man Ansammlungen von Korn und anderem Pflanzenmaterial vermeidet.

Nach einer Weiterentwicklung der Erfindung weist eine Erntemaschine einen Vorratsbehälter auf und einen Entladeförderer, der sich in den Vorratsbehälter erstreckt. Ein am Boden des Vorratsbehälters angebrachtes Element stützt den Entladeförderer ab. Das Element weist wenigstens eine durchgehende Öffnung auf, die als bodenseitiger Ablauf des Vorratsbehälters dient. Diese Öffnung wird durch den vorgeschlagenen Verschlussstopfen verschlossen.

Der Verschlussstopfen besteht in der Regel aus in sich elastischem Material wie weichem Kunststoff oder Gummi, das sich der Form der Öffnung im Vorratsbehälter anpasst und eine Abdeckung mit einer Abdichtung erübrigt.

In den Zeichnungen sind zwei nachfolgend näher beschriebene Ausführungsbeispiele der Erfindung dargestellt. Es zeigt:
- Fig. 1: eine schematische Seitenansicht einer Erntemaschine, in der die vorliegende Erfindung verwirklicht ist,
- Fig. 2: eine schematische Draufsicht auf die Erntemaschine aus Figur 1,
- Fig. 3: eine vergrößerte, perspektivische Teilansicht des Vorratsbehälters der Erntemaschine aus Figur 1,
- Fig. 4: eine von unten betrachtete vergrößerte, perspektivische Teilansicht des in Figur 3 gezeigten Vorratsbehälters,
- Fig. 5: eine vergrößerte perspektivische Ansicht eines Elements für den Schneckenförderer mit Verschlussstopfen, die gerade eingesetzt werden,

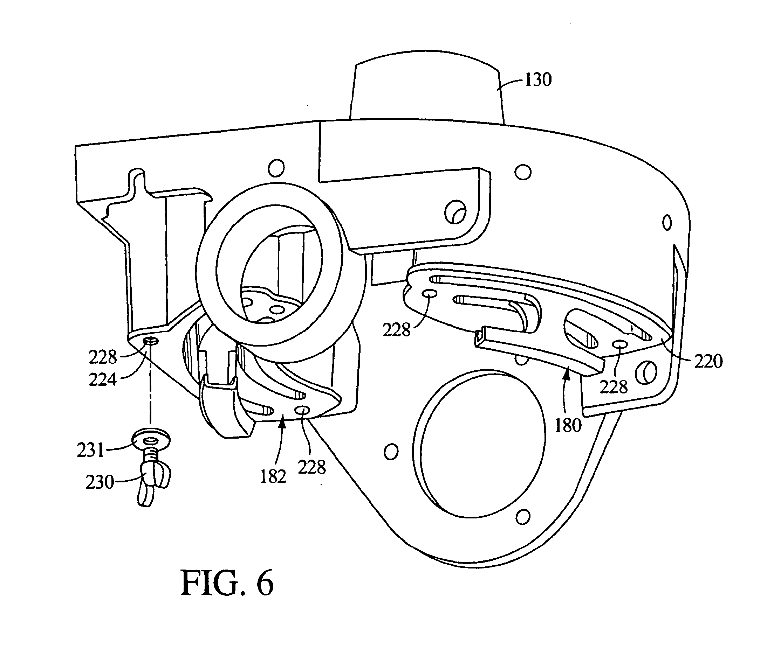

- Fig. 6: eine perspektivische Ansicht des Elements aus Figur 5 mit den vollständig eingesetzten Verschlussstopfen,
- Fig. 7: eine perspektivische rückwärtige Ansicht eines Verschlussstopfens für das Element,
- Fig. 8: eine perspektivische Ansicht des Verschlussstopfens aus Figur 7 von vorn,
- Fig. 9: eine perspektivische Ansicht eines anderen Verschlussstopfens für das Element von vorn, und
- Fig. 10: eine perspektivische Ansicht des Verschlussstopfens aus Figur 9 von hinten.

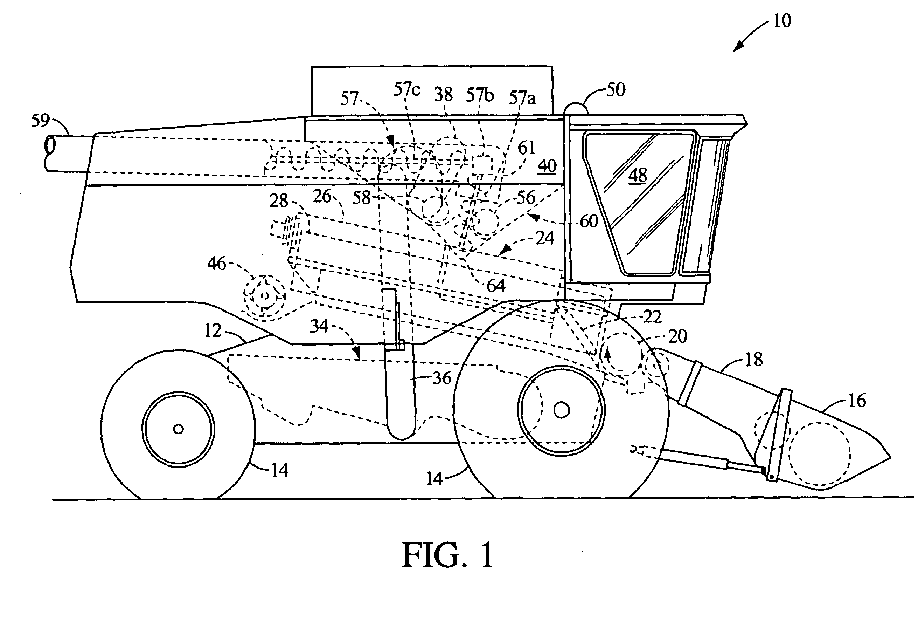

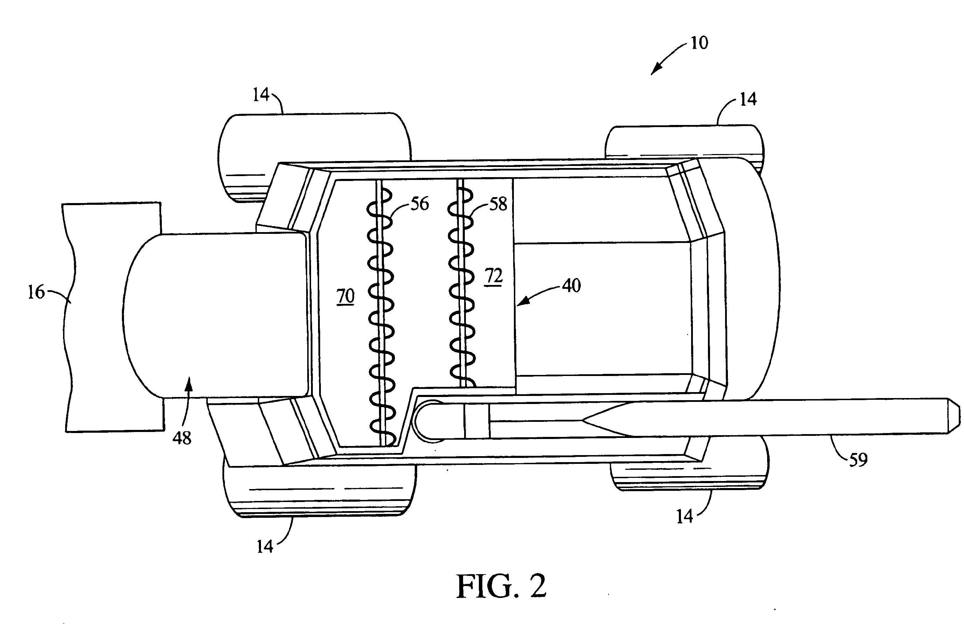

Die Figuren 1 und 2 zeigen einen landwirtschaftlichen Mähdrescher 10, der eine tragende Struktur 12 mit im Eingriff mit dem Erdboden befindlichen Mitteln 14 aufweist, die sich von der tragenden Struktur 12 nach unten erstrecken. Ein derartiger Mähdrescher ist in der US 6 285 198 detailliert beschrieben. Anstelle des dargestellten Axialmähdreschers kann die Erfindung auch an beliebigen anderen Typen von Mähdreschern verwendet werden, wie konventionellen Strohschüttlermaschinen. Ein Schneidwerk 16 wird verwendet, um Erntegut zu ernten und es einem Schrägförderer 18 zuzuführen. Das geerntete Gut wird durch den Schrägförderer 18 einer Leittrommel 20 zugeführt. Die Leittrommel 20 führt das Erntegut nach oben durch einen Einlassübergangsabschnitt 22 zu einer axialen Gutbearbeitungseinheit 24. Die axiale Gutbearbeitungseinheit 24 ist zwischen den Seitenwänden des Mähdreschers 10 angeordnet und wird von ihnen abgestützt.

Die axiale Gutbearbeitungseinheit 24 umfasst ein axiales Rotorgehäuse 26 und einen im Rotorgehäuse 26 angeordneten axialen Rotor 28. Das geerntete Gut tritt durch den Einlassübergangsabschnitt 22 in das Rotorgehäuse 26 ein. Der Rotor 28 ist mit einem Beschickungsabschnitt, einem Dreschabschnitt und einem Trennabschnitt ausgestattet. Das Rotorgehäuse 26 hat je einen entsprechenden Beschickungsabschnitt, Dreschabschnitt und Trennabschnitt.

Beide Gutbearbeitungsabschnitte des Rotors 28, der Dreschabschnitt und der Trennabschnitt sind mit Guteingriffszusammenbauten ausgestattet. Der Dreschabschnitt des Rotorgehäuses 26 ist mit einem Dreschkorb ausgestattet und der Trennabschnitt mit einem Rost. Aus der Gutmatte freigesetzte Körner und Spreu fallen durch den Dreschkorb und den Rost. Der Dreschkorb und der Rost verhindern den Durchtritt von Erntegut, das größer als Korn oder Kaff ist, in das Reinigungssystem 34.

Wie in der Figur 1 dargestellt, wird durch den Dreschkorb und den Rost fallendes Korn und Spreu dem Reinigungssystem 34 zugeführt, das die Spreu vom Korn trennt. Das saubere Korn wird dann durch einen Elevator 36 für sauberes Korn einem Fontänenschneckenförderer 38 zugeführt. Der Fontänenschneckenförderer 38 fördert das Korn in einen Vorratsbehälter 40 in der Art eines Korntanks. Der Elevator 36 für sauberes Korn und der Fontänenschneckenförderer 38 umfassen Mittel zum Bewegen des sauberen Korns vom Kornboden des Mähdreschers in den Vorratsbehälter 40. Das Korn wird durch einen Entladeförderer 57 in Form eines Schneckenförderers aus dem Vorratsbehälter 40 entfernt. Wenn das Stroh das Ende der Gutbearbeitungseinheit 24 erreicht hat, wird es durch einen Auslass einer Auswurftrommel 46 zugeführt. Die Auswurftrommel 46 fördert das Stroh zur Rückseite des Mähdreschers 10 hinaus. Die Bedienung des Mähdreschers 10 erfolgt von einer Bedienerkabine 48 aus.

Wenn der Vorratsbehälter 40 zu entleeren ist, führen quer angeordnete Entladeförderer 56 und 58 in Form von Schneckenförderern das Korn an die Seite des Vorratsbehälters 40, wo es mit dem Entladeförderer 57 in Berührung kommt, der das saubere Korn durch ein vertikales Entladerohr 61 und ein horizontales Entladerohr 59 leitet. Der Entladeförderer 57 umfasst einen vertikalen Abschnitt 57a, der sich zumindest teilweise innerhalb des Entladerohrs 61 befindet, ein rechtwinkliges Getriebe 57b, und einen horizontalen Abschnitt 57c innerhalb des Entladerohrs 59. Während einer Entladeoperation würde sich das Entladerohr 59 normalerweise von der Seite des Mähdreschers 10 nach außen erstrecken, so dass sauberes Korn einfacher in einen Wagen oder Anhänger geleitet werden kann.

Der Vorratsbehälter 40 umfasst einen Trog 60, der einen größeren Trogbereich 70 und einen kleineren Trogbereich 72 umfasst, welche die horizontalen Entladeförderer 56 bzw. 58 aufnehmen. Der Trog 60 ist zu einem Ladegehäuse oder Sumpf 64 hin offen. Der vertikale Abschnitt 57a des Entladeförderers 57 erstreckt sich durch das vertikale Rohr 61 und in den Sumpf 64. Das durch die horizontalen Entladeförderer 56 und 58 horizontal durch den Trog 60 geförderte Korn wird in den Sumpf 64 abgegeben und mittels des vertikalen Abschnitts 57a durch das Rohr 61 und mittels des horizontalen Abschnitts 57 c durch das Entladerohr 59 entfernt.

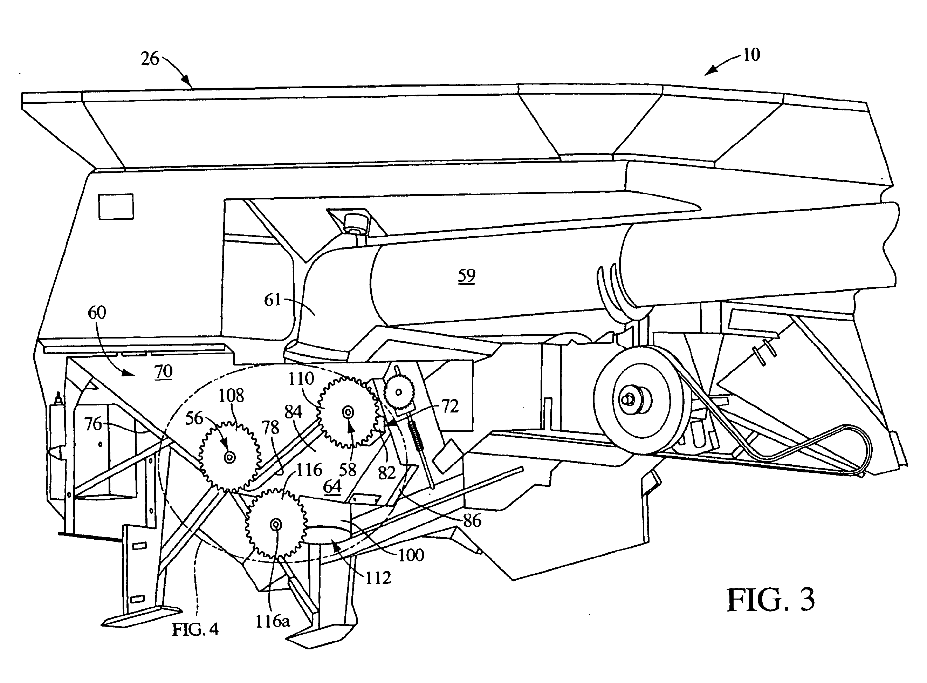

Wie in der Figur 3 illustriert, umfasst der größere Trogbereich 70 eine vordere geneigte Wand 76 und eine hintere geneigte Wand 78. Der kleinere Trogbereich 72 umfasst eine hintere geneigte Wand 82, die mit einer Krümmung in die hintere geneigte Wand 78 des größeren Trogbereichs 70 übergeht. Der Sumpf 64 umfasst Seitenwände 84, die sich im Wesentlichen parallel zueinander und vertikal erstrecken und im Wesentlichen durchgehend an den geneigten Wänden 78, 82 befestigt sind. Nur die linke Seitenwand 84 des Sumpfes 64 ist in den Figuren sichtbar, die rechte Seitenwand des Sumpfs 64 hat im Wesentlichen dieselbe Form wie die linke Seitenwand 84.

Die Entladeförderer 56, 58 werden durch Ritzel 108, 110 angetrieben. Der Entladeförderer 57 wird durch ein rechtwinkliges Getriebe 112 angetrieben, das durch ein Ritzel 116 angetrieben wird. Eine Kettenantriebsanordnung zum Drehen der Ritzel 108, 110, 116 wird detaillierter in der US 4 967 863 und in der US-Patentanmeldung 10/309977 beschrieben.

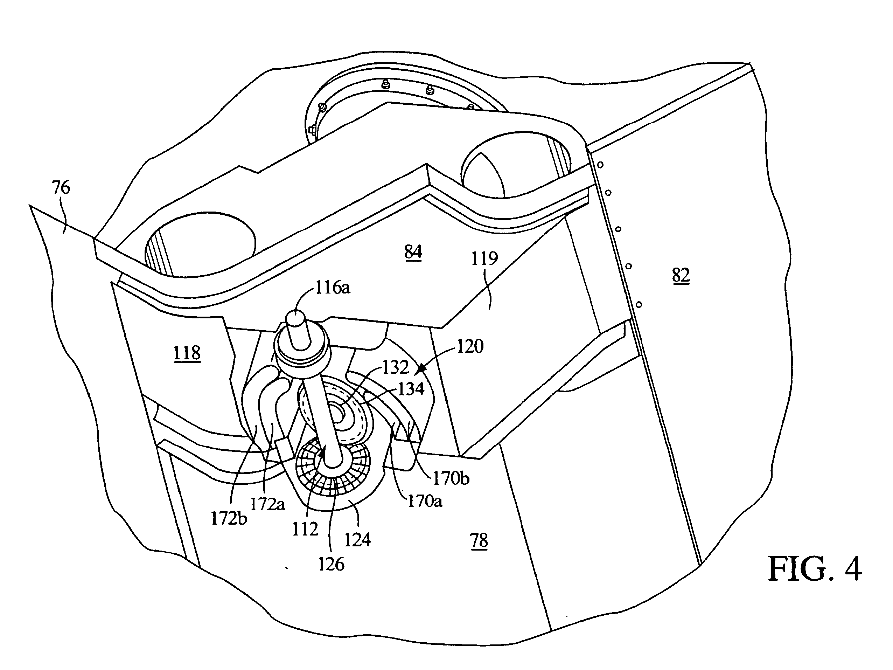

Wie in der Figur 4 dargestellt, umfasst der Sumpf 64 eine vordere geneigte Wand 118, eine hintere geneigte Wand 119 und ein Element 120 aus Gussmaterial für den Schneckenförderer. Das Element 120 ist an den geneigten Wänden 118, 119 befestigt. Die vordere geneigte Wand 118 ist an der vorderen geneigten Wand 76 und der linken Seitenwand 84 und der rechten Seitenwand des Sumpfs 64 befestigt. Die hintere geneigte Wand 119 ist an der hinteren geneigten Wand 82 und an der linken Seitenwand 84 und der rechten Seitenwand des Sumpfs 64 befestigt. Die linken und rechten Seitenwände des Sumpfs 64, das Element 120 und die Wände 118, 119 bilden einen im Wesentlichen abgeschlossenen Sumpf mit Ausnahme der unten beschriebenen Ablauföffnungen. Wenn unten beschriebene Verschlussstopfen in dem Element 120 angebracht sind, bildet der Sumpf 64 mit den Trogbereichen 70, 72 eine im Wesentlichen abgeschlossene Einheit.

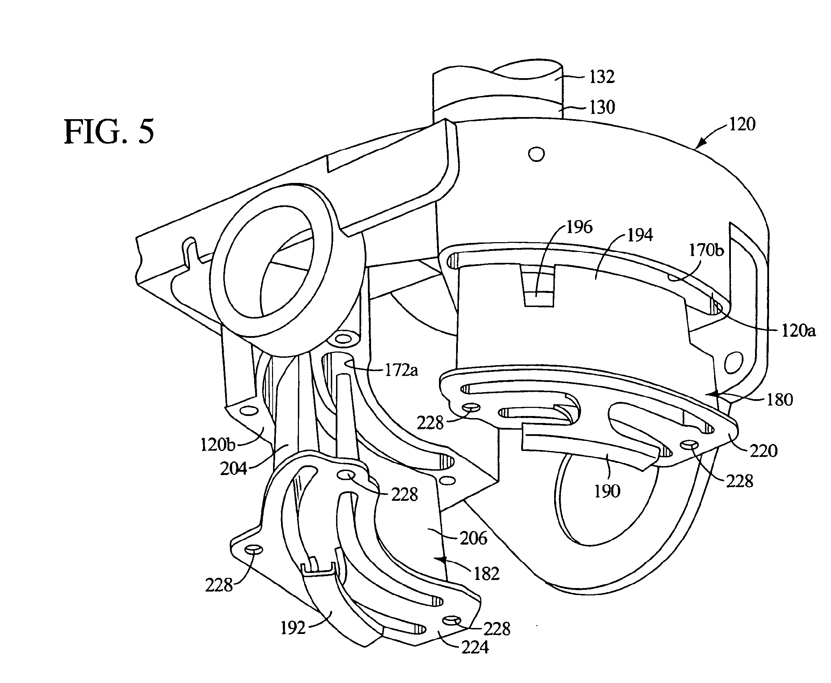

Das Element 120 umfasst Schwenklagerungen 122, 124 zur drehbaren Aufnahme eines mit horizontaler Drehachse versehenen Getriebezusammenbaus 126 für das rechtwinklige Getriebe 112. Das Element 120 umfasst außerdem eine Schwenklagerung 130 (Figur 5) zum Abstützen und drehbaren Halten einer vertikalen Welle 132 des Schneckenförderers 57. Ein Zahnrad 134 mit vertikaler Achse ist an der Welle 132 befestigt. Eine Drehung des Zahnrads 134 bewirkt eine Drehung des Schneckenförderers 57.

Das Element 120 umfasst zwei Paare von Ablauföffnungen 170a, 170b, 172a, 172b, die einen Ablauf von Wasser aus dem Sumpf 64 und sein Entleeren von Korn und anderem Pflanzenmaterial erlauben.

Wie in der Figur 5 illustriert, stellt die Erfindung zumindest einen und vorzugsweise zwei Verschlussstopfen 180, 182 bereit, die jeweils einen oder mehrere Körper 194, 196, 204, 206 aufweisen, die jeder mit einer Größe und Form versehen sind, die es erlaubt, sie in eine Öffnung 170a, 170b, 172a, 172b einzusetzen und den Boden des Elements 120 und somit den Sumpf 64 effektiv zu verschließen.

Jede Öffnung 170a, 170b, 172a, 172b hat einen mondsichelförmigen Querschnitt und der entsprechende Körper 194, 196, 204, 206 des Verschlussstopfens 180, 182 weist einen entsprechenden mondsichelförmigen horizontalen Querschnitt auf. Jeder Verschlussstopfen 180, 182 umfasst ein Griffelement 190, 192, das sich von den Unterseiten benachbarter Körper 194, 196, 204, 206 erstreckt. Jeder Körper 194, 196, 204, 206 kann eine Länge haben, die im Wesentlichen gleich der Tiefe der jeweiligen Öffnung 170a, 170b, 172a, 172b ist.

Jeder Verschlussstopfen 180, 182 kann einen Flansch 220, 224 aufweisen, der an einer unteren Oberfläche 120a, 120b des Elements 120 anliegt, wenn die Körper 194, 196, 204, 206 vollständig in die Öffnungen 170a, 170b, 172a, 182b eingesetzt sind. Das Element 120 kann eine Vielzahl mit Gewinde versehener Löcher 226 vorzugsweise in Form von Sackbohrungen aufweisen und die Flansche 220, 224 können eine Vielzahl glatter Löcher 228 aufweisen, die mit den mit Gewinde versehenen Löchern 226 ausgerichtet sind. Eine Vielzahl an Befestigungselementen 230 (in Form von Flügelschrauben) mit Unterlegscheiben 231 (von denen eine gezeigt ist), können in die glatten Löcher 228 eingesetzt und mit den mit Gewinde versehenen Löchern 226 in Eingriff gebracht werden, um die Verschlussstopfen 180, 182 an dem Element 120 zu befestigen.

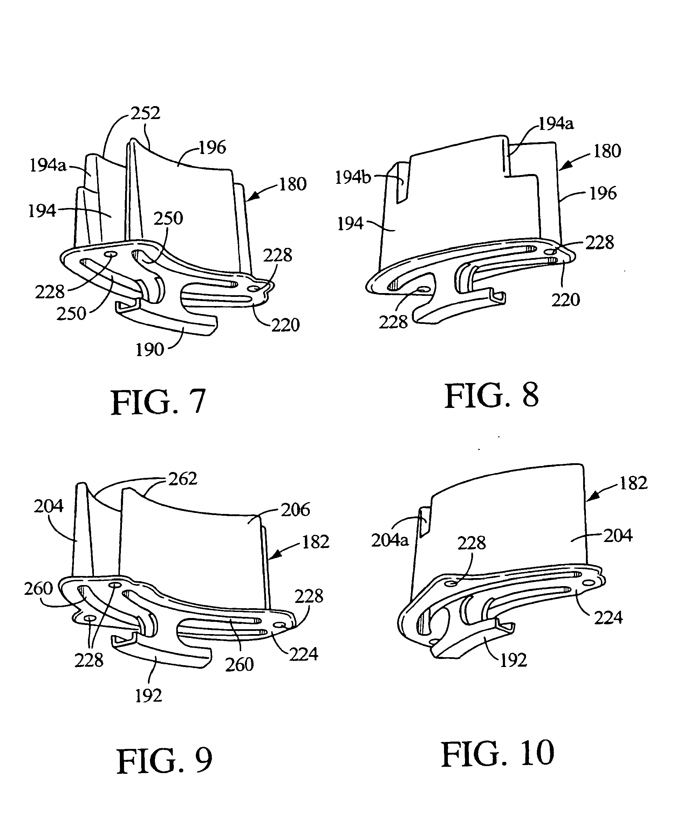

Die Figuren 7 und 8 stellen den Verschlussstopfen 180 zeichnerisch dar. Der hintere Körper 194 des Verschlussstopfens 180 weist strategisch angeordnete Ausschnitte 194a, 194b auf, die eine Beeinträchtigung des Körpers 194 durch die zum Befestigen des Elements 100 an der Wand 119 des Sumpfs 64 (s. Figur 4) dienenden Befestigungselemente verhindern.

Die Figuren 9 und 10 stellen den Verschlussstopfen 182 dar. Der vordere Körper 204 des Verschlussstopfens 182 weist einen strategisch angeordneten Ausschnitt 204a auf, der eine Beeinträchtigung des Körpers 194 durch die zum Befestigen des Elements 100 an der Wand 118 des Sumpfs 64 (s. Figur 4) dienenden Befestigungselemente verhindern.

Jeder Körper 194, 196, 204, 206 ist im Wesentlichen hohl mit einem offenen unteren Ende 250 und einem geschlossenen oberen Ende 252. Der hohle Aufbau des Verschlussstopfens 180, 182 erlaubt ein elastisches Zusammendrücken innerhalb der Öffnungen 170a, 170b, 172a, 172b, um den Körper 194, 196, 204, 206 besser mit der Form der Öffnungen 170a, 170b, 172a, 172b übereinstimmen zu lassen. Der hohle Aufbau erlaubt auch ein einfacheres Gießen der Verschlussstopfen 180, 182.

Die Verschlussstopfen 180, 182 sind vorzugsweise aus einem weichen Kunststoff aufgebaut, der mit der unteren Oberfläche des Elements 120 verschmilzt und eine verschließbare Abdeckung des Gusselements 120 erübrigt. Andere Kunststoffmaterialen oder andere Nicht-Kunststoffmaterialien können auch verwendet werden.

Die Verschlussstopfen 180, 182 verhindern, dass Material in den Öffnungen 170a, 170b, 172a, 172b im Element 120 Brücken bildet. Die Verschlussstopfen 180, 182 sind mit der vorhandenen Geometrie des Elements 120 in vielen kommerziell verfügbaren Mähdreschern der Fa. John Deere kompatibel.

## Patentansprüche

1. Kombination aus einem Vorratsbehälter (40) einer Erntemaschine (10) für geerntetes Erntegut, der eine als bodenseitige Ablauföffnung dienende Öffnung (170a, 170b, 172a, 172b) aufweist und einem Verschlussstopfen (180, 182), der in die Öffnung (170a, 170b, 172a, 172b) einsteckbar ist, um sie zu verschließen.

2. Kombination nach Anspruch 1, **dadurch gekennzeichnet, dass** die Querschnitte der Öffnung (170a, 170b, 172a, 172b) und des Verschlussstopfens (180, 182) mondsichelförmig sind.

3. Kombination nach Anspruch 1 oder 2, **dadurch gekennzeichnet, dass** der Verschlussstopfen (180, 182) an der Außenseite der Öffnung (170a, 170b, 172a, 172b) ein Griffelement (190, 192) aufweist.

4. Kombination nach einem der Ansprüche 1 bis 3, **dadurch gekennzeichnet, dass** im Vorratsbehälter (40) zwei Öffnungen (170a, 170b, 172a, 172b) in Nachbarschaft zueinander angeordnet sind, und dass der Verschlussstopfen (180, 182) zwei den Öffnungen (170a, 170b, 172a, 172b) zugeordnete Körper (194, 196, 204, 206) aufweist.

5. Kombination nach Anspruch 4, **dadurch gekennzeichnet, dass** das Griffelement (190, 192) eine Überbrückung zwischen den beiden Körpern (194, 196, 204, 206) bildet.

6. Kombination nach einem der Ansprüche 1 bis 5, **dadurch gekennzeichnet, dass** der Verschlussstopfen (180, 182) einen Flansch (220, 224) aufweist, der an einer äußeren Oberfläche des Vorratsbehälters (40) anliegt, wenn der Verschlussstopfen (180, 182) vollständig in die Öffnung (170a, 170b, 172a, 172b) eingesetzt ist.

7. Kombination nach Anspruch 6, **dadurch gekennzeichnet, dass** der Vorratsbehälter (40) eine mit Gewinde versehene Öffnung (226) aufweist, die mit einer Öffnung (228) im Flansch (220, 224) ausgerichtet ist, und dass ein Befestigungselement (230) sich durch die Öffnung (228) im Flansch (220, 224) erstreckt und mit dem Gewinde der Öffnung (226) im Vorratsbehälter (40) im Eingriff steht.

8. Kombination nach einem der Ansprüche 1 bis 7, **dadurch gekennzeichnet, dass** die Länge des Verschlussstopfens (180, 182) zumindest näherungsweise mit der Tiefe der Öffnung (170a, 170b, 172a, 172b) übereinstimmt.

9. Kombination nach einem der Ansprüche 1 bis 8, **dadurch gekennzeichnet, dass** die Öffnung (170a, 170b, 172a, 172b) in einem Element (120) am Boden des Vorratsbehälters (40) angebracht ist, wobei das Element (120) einen Entladeförderer (57) abstützt.

10. Kombination nach einem der vorhergehenden Ansprüche, **dadurch gekennzeichnet, dass** der Verschlussstopfen (180, 182) aus elastischem Material aufgebaut ist.

## Claims

1. Combination comprising a grain tank (40) of a harvesting machine (10) for harvested crop material, which has an opening (170a, 170b, 172a, 172b) serving as a drainage opening on the base side, and a plug (180, 182), which can be plugged into the opening (170a, 170b, 172a, 172b) in order to close it.

2. Combination according to Claim 1, **characterised in that** the cross-sections of the opening (170a, 170b, 172a, 172b) and the plug (180, 182) are crescent-shaped.

3. Combination according to Claim 1 or 2, **characterised in that** the plug (180, 182) has a handle member (190, 192) on the outside of the opening (170a, 170b, 172a, 172b).

4. Combination according to one of Claims 1 to 3, **characterised in that** two openings (170a, 170b, 172a, 172b) are arranged in the vicinity of one another in the grain tank (40), and that the plug (180, 182) has two bodies (194, 196, 204, 206) matched to the openings (170a, 170b, 172a, 172b).

5. Combination according to Claim 4, **characterised in that** the handle member (190, 192) forms a bridge between the two bodies (194, 196, 204, 206).

6. Combination according to one of Claims 1 to 5, **characterised in that** the plug (180, 182) has a flange (220, 224), which abuts against an outer surface of the grain tank (40), when the plug (180, 182) is fully inserted into the opening (170a, 170b, 172a, 172b).

7. Combination according to Claim 6, **characterised in that** the grain tank (40) has an opening (226), which is provided with a thread and is aligned with an opening (228) in the flange (220, 224), and that a fastener (230) extends through the opening (228) in the flange (220, 224) and engages with the thread of the opening (226) in the grain tank (40).

8. Combination according to one of Claims 1 to 7, **characterised in that** the length of the plug (180, 182) is at least approximately the same as the depth of the opening (170a, 170b, 172a, 172b).

9. Combination according to one of Claims 1 to 8, **characterised in that** the opening (170a, 170b, 172a, 172b) is provided in an element (120) on the base of the grain tank (40), wherein the element (120) supports an unloading auger (57).

10. Combination according to one of the preceding claims, **characterised in that** the plug (180, 182) is made from elastic material.

## Revendications

1. Combinaison formée par un réservoir (40) de produits récoltés dans une machine de récolte (10), lequel comporte une ouverture (170a, 170b, 172a, 172b) formant une ouverture d'évacuation du côté du fond, et un bouchon (180, 182) qui est destiné à être enfiché dans l'ouverture (170a, 170b, 172a, 172b) en vue de la fermer.

2. Combinaison selon la revendication 1, **caractérisée en ce que** les sections de l'ouverture (170a, 170b, 172a, 172b) et du bouchon (180, 182) sont réalisées en forme de croissant.

3. Combinaison selon la revendication 1 ou 2, **caractérisée en ce que** le bouchon (180, 182) comporte un élément de préhension (190, 192) sur le côté extérieur de l'ouverture (170a, 170b, 172a, 172b).

4. Combinaison selon l'une quelconque des revendications 1 à 3, **caractérisée en ce que** deux ouvertures (170a, 170b, 172a, 172b) sont agencées à proximité l'une de l'autre dans le réservoir (40) et **en ce que** le bouchon (180, 182) comporte deux corps (194, 196, 204, 206) correspondants aux deux ouvertures (170a, 170b, 172a, 172b).

5. Combinaison selon la revendication 4, **caractérisée en ce que** l'élément de préhension (190, 192) forme un pont entre les deux corps (194, 196, 204, 206).

6. Combinaison selon l'une quelconque des revendications 1 à 5, **caractérisée en ce que** le bouchon (180, 182) comporte une collerette (220, 224) qui vient en appui sur une surface extérieure du réservoir (40) lorsque le bouchon (180, 182) est complètement enfiché dans l'ouverture (170a, 170b, 172a, 172b).

7. Combinaison selon la revendication 6, **caractérisée en ce que** le réservoir (40) comporte un orifice (226) taraudé, qui est aligné avec un orifice (228) dans la collerette (220, 224), et **en ce qu'**un élément de fixation (230) passe à travers l'orifice (228) dans la collerette (220, 224) et engrène avec le taraudage de l'orifice (226) dans le réservoir (40).

8. Combinaison selon l'une quelconque des revendications 1 à 7, **caractérisée en ce que** la longueur du bouchon (180, 182) coïncide au moins à peu près à la profondeur de l'ouverture (170a, 170b, 172a, 172b).

9. Combinaison selon l'une quelconque des revendications 1 à 8, **caractérisée en ce que** l'ouverture (170a, 170b, 172a, 172b) est ménagée dans un élément (120) au niveau du fond du réservoir (40), l'élément (120) supportant une vis de déversement (57).

10. Combinaison selon l'une quelconque des revendications précédentes, **caractérisée en ce que** le bouchon (180, 182) est réalisé dans un matériau élastique.
